# EUROPÄISCHE PATENTSCHRIFT

(11) **EP 2 950 093 B1**
(45) Veröffentlichungstag und Bekanntmachung des Hinweises auf die Patenterteilung: **11.01.2017**
(21) Anmeldenummer: 15001632.7
(22) Anmeldetag: 01.06.2015
(51) Int. Cl.: G01N 30/34, G01N 30/46, G01N 30/32

(54) **HPLC-ANALYSEEINRICHTUNG MIT EINEM EINZIGEN BINÄREN SPRITZENPUMPENSYSTEM UND DAZUGEHÖRIGER VENTILSCHALTUNG**
HPLC ANALYSIS DEVICE WITH A SINGLE BINARY SYRINGE PUMPING SYSTEM AND CORRESPONDING VALVE CIRCUIT
DISPOSITIF D'ANALYSE HPLC DOTÉ D'UN SYSTÈME DE POMPE À SERINGUE BINAIRE ET CIRCUIT DISTRIBUTEUR ASSOCIÉ

(30) Priorität: 30.05.2014 CH 8342014
(43) Veröffentlichungstag der Anmeldung: 02.12.2015
(73) Patentinhaber: Döbelin, Werner, 4153 Reinach (CH)
(72) Erfinder: Döbelin, Werner, 4153 Reinach (CH)
(74) Vertreter: Wüstefeld, Regine Marie

(56) Entgegenhaltungen:
- WO-A1-2009/098125
- WO-A1-2014/040727
- US-A- 5 462 660
- US-A1- 2005 167 348
- US-A1- 2005 214 130

## Beschreibung

Die Erfindung betrifft eine HPLC-Analyseeinrichtung mit einem einzigen binären Spritzenpumpensystem und dazugehöriger Ventilschaltung sowie deren Verwendung im Bereich üblichen sowie der Ultra-, Mikro- und Nano-HPLC.

HPLC (High Pressure Liquid Chromatography)-Verfahren werden vorwiegend zur schnellen Auftrennung von Substanzgemischen verwendet. Dabei geht heute der Trend zu immer schnelleren Analysezeiten, um einen erhöhten Probendurchsatz zu erzielen. Zu diesem Zweck werden immer mehr ultraschnelle HPLC-Systeme genutzt. Aufgrund von verfügbaren kleinen Säulenpartikeln und der Möglichkeit schneller Probenaufgaben sind sehr kurze Analysezyklen möglich. Dabei wird grundsätzlich ein Eluent als mobile Phase, im folgenden auch als Laufmittel bezeichnet, über eine Pumpenanordnung und eine zu analysierende Probe über ein Injektionssystem in Kombination mit einem Injektionsventil in eine Analysesäule gefördert. Zusätzlich kann der Analysesäule noch eine Vorsäule zur Aufreinigung und Aufkonzentrierung vorgeschaltet sein.

Bei einer Gradientenelution im Rahmen der HPLC-Analyse werden für das Hochdruckgradientensystem üblicherweise zwei Pumpen für die Eluenten oder Laufmittel verwendet.

Wesentliche Anforderungen an die Pumpenanordnung sind eine ausreichende und vor allem konstante Förderleistung, um die Analysen reproduzierbar zu machen, eine möglichst geringe Pulsation, um eine stabile Detektion zu erreichen, ein geringes Innenvolumen, um eine schnelle Gradientenbildung zu ermöglichen und eine ausreichende Druckstabilität, da je nach Art der Analysensäulenfüllung ein hoher Druck auftreten kann. Überwiegend werden für diesen Zweck Kurzhub-Kolbenpumpen eingesetzt.

Damit bei einer automatischen HPLC-Analyse schnelle Analysezeiten und ein erhöhter Probendurchsatz erreicht werden können, sollte der Fluß durch die analytische Säule nicht unterbrochen werden, wenn einerseits die Probe zur Aufreinigung und Aufkonzentrierung von einer Injektionsschlaufe des Injektionssystems auf die Vorsäule geladen und weiter zu der analytischen Säule gefördert wird, und andererseits das Waschen und Konditionieren der Vorsäule und der analytischen Säule sowie das Equilibrieren des Gradienten erfolgen muß. Es ist bekannt, daß die Equilibrierungszeit bei der Gradientenelution einen entscheidenden Einfluß auf die gesamte Analysezeit hat.

Um zu erreichen, der Fluß durch die analytische Säule für diese Vorgänge nicht unterbrochen wird, wird üblicherweise eine Pumpenanordnung aus zwei oder mehr Pumpen bzw. Pumpensystemen verwendet.
Auch sind für diesen Zweck sogenannte duale Gradientensysteme entwickelt worden, die prinzipiell aus zwei HPLC-Anlagen bestehen, die sich den Autoinjektor und den Detektor teilen. Während die Analyse auf dem ersten System läuft, wird das zweite System gespült und equilibriert, so daß es vor dem Ablauf der Analyse auf dem ersten System fertig ist für den nächsten Lauf. Ein solches System ist sehr aufwendig.

Für HPLC-Anwendungen aller Art sind Ventile ubiquitär. Dabei werden für Injektionen in der Regel 2-Positionsventile eingesetzt. Für die Lösungsmittelauswahl und die Säulenschaltung werden üblicherweise Multipositionsventile verwendet. Die WO2009098125 offenbart eine HPLC-Analyseeinrichtung mit Injektionsport, Injektionsventil, Vorsäule, analytischer Säule, und einem Spritzenpumpensystem mit Ventilen.

Ausgehend von diesem Stand der Technik lag der vorliegenden Erfindung daher die Aufgabe zugrunde, eine HPLC-Analyseeinrichtung bereitzustellen, die bei einer automatischen HPLC-Analyse eine schnelle Analysezeit und einen erhöhten Probendurchsatz ermöglicht und dennoch einen zu dem bekannten Stand der Technik vergleichsweise einfacheren Aufbau aufweist.

Gelöst wird diese Aufgabe durch eine HPLC-Analyseeinrichtung, die einen Injektionsport für das Injizieren von zumindest einer Probe aufweist, wobei dem Injektionsport ein Injektionsventil zugeordnet ist, und die des weiteren eine Vorsäule aufweist, der ein Vorsäulenschaltventil zugeordnet ist. Weiterhin weist die HPLC-Analyseeinrichtung eine analytische Säule und ein einziges Spritzenpumpensystem auf, das als ein binäres Spritzenpumpensystem ausgebildet ist. Bei diesem binären Spritzenpumpensystem weist jede der Pumpen Pumpenköpfe auf, denen wiederum jeweils ein Pumpenkopfventil zugeordnet ist, und jede der Pumpen verfügt über zwei unabhängige, voneinander getrennte und schaltbare Ausgänge. Die einzelnen Ausgänge der beiden Pumpen sind über T-Stücke verbunden, wobei das eine der T-Stücke mit dem Injektionsventil und das andere der T-Stücke mit dem Vorsäulenschaltventil verbunden ist.

Auf diese Weise wird eine HPLC-Analyseeinrichtung bereitgestellt, die es mittels der jeweiligen Ventile und ihrer Beschaltung ermöglicht, das alle notwendigen, für den Betrieb der HPLC-Analyseeinrichtung erforderlichen Funktionen, dazu gehören das Laden der Probe, gegebenenfalls eine Festphasenextraktion für eine mögliche Anreicherung, Aufkonzentration oder Isolation der Probe bzw. eines Analyten in der Probe, das Transferieren der Probe, das Chromatographieren, das Reinigen und Konditionieren der Vorsäule und der analytischen Säule, mit nur einem einzigen, binären Pumpensystem gewährleistet werden.

Durch die jeweiligen Ventilstellungen der genannten Ventile wird der Funktionsablauf des binären Pumpensystems als Gradientenpumpe synchronisiert. Die vorzugsweise als Multipositionsventile ausgebildeten Pumpenkopfventile können unabhängig voneinander Positionen einnehmen, welche das vorzugsweise als 2-Positionsventil ausgebildete Injektionsventil mit der Probenschlaufe einbindet, das vorzugsweise als 2-Positionsventil ausgebildete Vorsäulenschaltventil mit der Vorsäule einbindet, das Füllen des Pumpenkopfs oder das Komprimieren des Laufmittels im Pumpenkopf ermöglicht oder ermöglicht, daß das im Pumpenkopf befindliche Laufmittel in Zusammenwirken mit dem Injektionsventil und dem Vorsäulenschaltventil in den Abfall gepumpt werden kann, die beiden Laufmittel getrennt oder als Mischung über das Vorsäulenschaltventil und die Vorsäule oder direkt auf die analytische Säule geführt werden oder eines der beiden Laufmittel über das Injektionsventil und über die Probenschlaufe oder direkt über das Vorsäulenschaltventil und die Vorsäule oder direkt in den Abfall gepumpt werden kann.

Gemäß einer Weiterbildung der erfindungsgemäßen HPLC-Analyseeinrichtung kann vorgesehen sein, daß je ein Ausgang der beiden Pumpen des binären Spritzenpumpensystems mit einem Flußsensor gekoppelt ist, die Ausgänge der Flußsensoren verbunden und über ein Ventil der analytischen Säule zugeschaltet sind.

Die Erfindung bezieht sich auch auf die Verwendung der erfindungsgemäßen HPLC-Analyseeinrichtung in einer ihrer Ausgestaltungen, wie weiter oben erläutert, für den Betrieb im Bereich der Ultra-, Mikro- und Nano-HPLC. Die Verwendung im Rahmen der üblichen HPLC-Ausführung ist selbstverständlich mitumfaßt und soll bereits durch die weiter oben erfolgte Erläuterung der erfindungsgemäßen HPLC-Analyseeinrichtung beansprucht sein.

Im folgenden soll die Erfindung anhand der beigefügten Zeichnung näher erläutert werden.

Dabei zeigt die einzige Fig.:

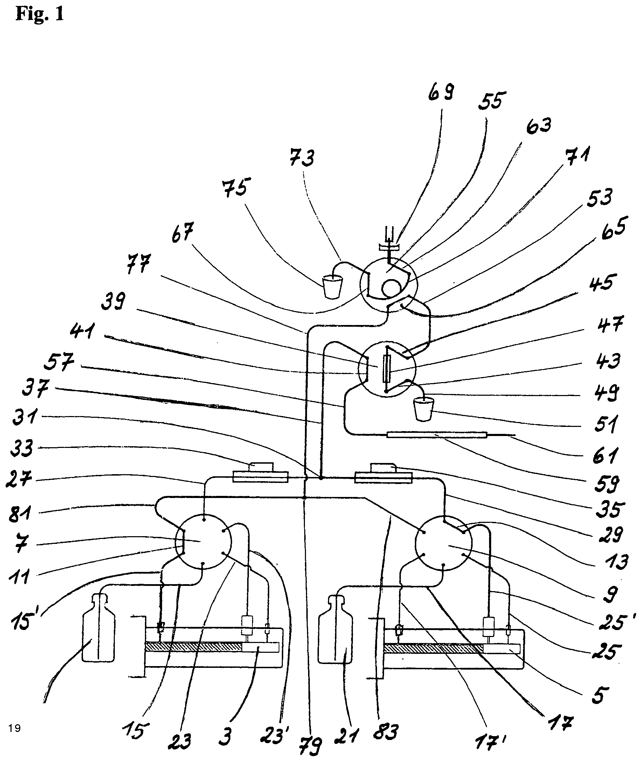

- Fig. 1:: Eine schematische Ansicht einer HPLC-Analyseeinrichtung mit einem einzigen, binären Spritzenpumpensystem und der dazugehörigen Ventilschaltung.

In der einzigen, als Fig. 1 bezeichneten Figur ist eine HPLC-Analyseeinrichtung 1 dargestellt, die über ein Spritzenpumpensystem verfügt, das in Form einer einzigen, binären HPLC-Hochdruckgradientenpumpe ausgebildet ist, wobei in Fig. 1 nur die Pumpenköpfe dieser Spritzenpumpe dargestellt und mit den Bezugsziffern 3 und 5 versehen sind. Im folgenden soll zunächst der Aufbau oder die Konfiguration der erfindungsgemäßen HPLC-Analyseeinrichtung 1 mit dem Spritzenpumpensystem näher erläutert werden.

Das binäre Spritzenpumpensystem zeichnet, wie aus Fig. 1 ersichtlich, zwei getrennte, voneinander unabhängige Pumpenköpfe 3, 5 aus, denen jeweils Pumpenkopfventile 7 und 9 zugeordnet sind. Diese Pumpenkopfventile 7, 9 sind als Multipositionsventile ausgebildet.
Des weiteren sind mit den Bezugsziffern 11 und 13 jeweils VerbindungsGravuren der Pumpenkopfventile 7, 9 angegeben. Die Pumpenkopfventile 7, 9 sind jeweils über Leitungen 15, 17 sowie 15' und 17' mit Flaschen 19, 21 verbunden, welche Laufmittel enthalten. Weitere Leitungen 23, 25 sowie 23' und 25' bilden Verbindungen der Pumpenkopfventile 7, 9 mit den Pumpenköpfen 3 und 5. Außerdem führen noch Leitungen 27 und 29 von dem jeweiligen Pumpenkopfventil 7, 9 zu einem ersten T-Stück 31. Diese Leitungen 27, 29 weisen jeweils noch einen Flußsensor 33, 35 auf.
Ausgehend von dem genannten T-Stück 31 führt eine einzige Leitung 37 zu einem Vorsäulenschaltventil 39, so daß das erste T-Stück 31 mit dem Vorsäulenschaltventil 39 verbunden ist. Das Vorsäulenschaltventil 39 ist als ein 2-Positionsventil ausgebildet. Hier sind drei Verbindungsgravuren des Vorsäulenschaltventils 39 mit den Bezugsziffern 41, 43 und 45 bezeichnet.

Über das Vorsäulenschaltventil 39 kann eine Verbindung zu einer Vorsäule 47 hergestellt werden. Von dieser führt eine Leitung 49 zu einem Abfall 51 und es führt eine Leitung 53 zu einem HPLC-Injektionsventil 55. Auch dieses HPLC-Injektionsventil 55 ist als ein 2-Positionsventil ausgebildet.
Über das Vorsäulenschaltventil 39 kann außerdem über Leitung 57 eine Verbindung zu einer analytischen Säule 59 hergestellt werden. Die analytische Säule ist mit einem Ausgang 61 verbunden.
Bei dem HPLC-Injektionsventil 55 sind wiederum drei Verbindungsgravuren zu nennen, welche mit den Bezugsziffern 63, 65 und 67 bezeichnet sind. Über diese Verbindungsgravuren 63, 65 und 67 können Verbindungen zu einem Injektionsport 69, einer Probenschlaufe 71 und über eine Leitung 73 zu einem Abfall 75 hergestellt werden.
Mit dem HPLC-Injektionsventil 55 ist auch noch eine Leitung 77 verbunden, welche zu einem weiteren, zweiten T-Stück 79 führt. Dieses zweite T-Stück ist somit seinerseits mit dem HPLC-Injektionsventil 55 verbunden. In das zweite T-Stück 79 münden Leitungen 81 und 83, die mit dem jeweiligen Pumpenkopfventil 7 bzw. 9 verbunden sind und dem Transport von Laufmittel dienen.

Somit verfügt jede Pumpe des Spritzenpumpensystems 1 der binären HPLC-Hochdruckgradientenpumpe mit den beiden getrennten, voneinander unabhängigen Pumpenköpfen 3, 5 und den diesen zugeordneten Pumpenkopfventilen 7, 9 über zwei unabhängige, voneinander getrennte und schaltbare Ausgänge, wobei die Ausgänge über das eine und das andere T-Stück 31, 79 verbunden sind. Dabei ist das eine der T-Stücke 31 mit dem Vorsäulenschaltventil 39 und das andere der T-Stücke 79 mit dem HPLC-Injektionsventil 55 verbunden.

Dieses binäre Spritzenpumpensystem ermöglicht es aufgrund seiner spezifischen Ventile, d.h. den Pumpenkopfventilen 7, 9 als Multipositionsventilen und dem Vorsäulenschaltventil 39 sowie dem HPLC-Injektionsventil 55, welche jeweils als 2-Positionsventile ausgebildet sind, und voneinander unabhängigen, individuell wählbaren Ventilstellungen, daß eine HPLC-Analyse, gegebenenfalls unter Einbeziehung einer Festphasen-Extraktion für eine mögliche Anreicherung, Aufkonzentration oder Isolation der Probe bzw. eines Analyten in der Probe, automatisiert und mit nur diesem einen binären Spritzenpumpensystem durchgeführt werden kann. Dies gilt ebenso für den HPLC-Betrieb im Rahmen der Ultra-, Mikro- und Nano-HPLC.

Alle für das Durchführen der HPLC-Analyse notwendigen Funktionen, dazu gehören beispielsweise das Laden der Probe auf eine Vorsäule zur Aufreinigung, das Auflconzentrieren, die Festphasen-Extraktion, das Transferieren der Probe von der Injektionsschlaufe auf die Vorsäule und von der Vorsäule auf die analytische Säule, das Chromatographieren und damit die Trennung auf der analytischen Säule, und nicht zuletzt das Reinigen, Waschen, und Konditionieren der Vorsäule wie der analytischen Säule und das Fahren und Aufrechterhalten eines analytischen Gradienten, werden mit nur diesem einen binären Spritzenpumpensystem ermöglicht, und zwar ohne daß der Fluß durch die analytische Säule unterbrochen wird.

Um dies zu erreichen, werden die jeweiligen Ventilstellungen der genannten Ventile und der Funktionsablauf der Gradientenpumpe synchronisiert, wobei die Pumpenkopfventile 7, 9 als Multipositionsventile unabhängig voneinander Positionen einnehmen können, welche beispielsweise das HPLC-Injektionsventil 55 als 2-Positionsventil mit der Probenschlaufe 71 einbindet oder das Vorsäulenschaltventil 39, ebenso als 2-Positionsventil, mit der Vorsäule 47 einbindet, das Füllen des jeweiligen Pumpenkopfs 3, 5 ermöglicht oder das Komprimieren des Laufmittels im Pumpenkopf, oder ermöglicht, daß das Laufmittel in dem Pumpenkopf in Kombination mit dem Injektionsventil 55 und dem Vorsäulenschaltventil 39 in den Abfall gepumpt werden kann.
Die beiden Laufmittel können getrennt oder als Mischung über das Vorsäulenschaltventil 39 und über die Vorsäule 47 oder direkt auf die analytische Säule 59 geführt werden. Eines der beiden Laufmittel kann über das HPLC-Injektionsventil 55 und über die Probenschlaufe 71 oder direkt über das Vorsäulenschaltventil 39 über die Vorsäule 47 oder direkt in den Abfall 51 gepumpt werden.

Dies soll im praktischen Detail noch näher erläutert werden.

### Ansaugen von Laufmittel

Über die Leitungen 15, 17 und 15', 17' kann durch geeignete Stellung der Multipositionspumpenkopfventile 7, 9 der getrennten und unabhängigen Pumpenköpfe 3, 5 des binäres Spritzenpumpensystems über die Verbindungsgravuren 11, 13 der jeweiligen Pumpenkopfventile 7, 9 Laufmittel aus den jeweiligen Flaschen 19, 21 angesaugt werden.

### Vorkomprimieren des Laufmittels

Verbindet die Verbindungsgravur 11 die Leitungen 23 und 23', bzw. die Verbindungs-Gravur 13 die Leitung 25 und 25', so wird das Laufmittel in den jeweiligen Pumpenköpfen 3 und 5 vorkomprimiert.

### Führen des Laufmittels zum Vorsäulenschaltventil 39

Verbindet die Verbindungsgravur 11 die Leitungen 23' und 27, und die Verbindungsgravur 13 die Leitungen 25' und 29, so wird das Laufmittel zum Vorsäulenschaltventil 39 geführt. Es passiert dabei jeweils die Flußsensoren 33 und 35 und gelangt über das T-Stück 31 zu der nun einzigen Leitung 37 und von dort zum Vorsäulenschaltventil 39.

### Verbindungsgravuren des Vorsäulenschaltventils

Die drei in Fig. 1 mit den Bezugsziffern 41, 43 und 45 versehenen Verbindungsgravuren können grundsätzlich in zwei Positionen geschaltet werden.

In der einen Position sind die Leitungen 37 und 57 mit der analytischen Säule 59 und dem Ausgang 61 verbunden. Dabei ist die Leitung 53 mit der Vorsäule 47 und der Leitung 49 zum Abfall 51 verbunden.

In der zweiten Position ist die Leitung 37 mit der Vorsäule 47 und der Leitung 57, der analytischen Säule 59 und dem Ausgang 61 verbunden und die Leitung 53 ist direkt mit der Leitung 49 und dem Abfall 51 verbunden.

### Verbindungsgravuren des Injektionsventils 55

Auch das Injektionsventil 55 weist drei, hier mit den Bezugsziffern 63, 65, 67 angegebene Verbindungsgravuren auf, welche ebenfalls in zwei Positionen geschaltet werden können.
Verbinden die Verbindungsgravuren 63 und 67 die Probenschlaufe 71 und den Injektionsport 69 mit der Leitung 73 zu dem Abfall 75, dann kann die Probe in die Probenschlaufe 71 geladen werden und je nach Stellung der Pumpenkopfventile 7, 9 über die Verbindungsgravur 11, 13 kann Laufmittel über die Leitung 81, 83 zu dem T-Stück 79 und weiter über die Leitung 77, die Verbindungsgravur 65 und über die Leitung 53 zu dem Vorsäulenschaltventil 39 geführt werden oder die Leitung 77 ist durch die Verbindungsgravuren mit der Probenschlaufe 71 und der Leitung 53 verbunden.

Auf diese Weise kann die jeweilige Probe aus der Probenschlaufe 71 mit dem Laufmittel 19, d.h. dem Laufmittel aus dem mit der Bezugsziffer 19 bezeichneten Reservoir, aus dem Pumpenkopf 3 über die Leitung 15', die Verbindungsgravur 11, die Leitung 81, das T-Stück 79, weiter über die Leitung 77 und die Leitung 53 auf die Vorsäule 47 transferiert werden, während das Laufmittel 21, d.h. das Laufmittel aus dem mit der Bezugsziffer 21 bezeichneten Reservoir, über die Leitung 25', die Verbindungsgravur 13, die Leitung 29, den Flußsensor 35 zu dem T-Stück 31 und weiter über die Leitung 37, die Verbindungsgravur 41 und die Leitung 57 durch die analytische Säule 59 zu dem Ausgang 61 gefördert wird. Nachdem die jeweilige Probe auf die Vorsäule 47 gefördert wurde, kann durch Schalten von Pumpenkopfventil 7 auch Laufmittel 19 über die Leitung 23', die Verbindungsgravur 11, die Leitung 27, den Flußsensor 33 zu dem T-Stück 31 und weiter über die Leitung 37, die Verbindungsgravur 41 und die Leitung 57 auf die analytische Säule 59 und in den Ausgang 61 gefördert werden.
Dabei kann die analytische Säule 59 für die jeweilige HPLC-Analyse konditioniert werden, bevor durch das Schalten des Vorsäulenschaltventils 39 die Vorsäule 47 und somit die jeweilige Probe der analytischen Säule 59 zugeschaltet wird.

## Patentansprüche

1. HPLC-Analyseeinrichtung, mit einem Injektionsport (69), dem ein Injektionsventil (55) zugeordnet ist, einer Vorsäule (47), der ein Vorsäulenschaltventil (39) zugeordnet ist, einer analytischen Säule (59) und einem einzigen Spritzenpumpensystem, das als ein binäres Spritzenpumpensystem ausgebildet ist, bei dem jede der Pumpen des Spritzenpumpensystems Pumpenköpfe (3, 5) aufweist, denen jeweils ein Pumpenkopfventil (7, 9) zugeordnet ist, und über zwei unabhängige, voneinander getrennte und schaltbare Ausgänge verfügt, und die einzelnen Ausgänge der beiden Pumpen über T-Stücke verbunden sind, wobei das eine der T-Stücke (79) mit dem Injektionsventil (55) und das andere der T-Stücke (31) mit dem Vorsäulenschaltventil (39) verbunden ist.

2. HPLC-Analyseeinrichtung nach Anspruch 1, **dadurch gekennzeichnet, daß** jedes der Pumpenkopfventile (7, 9) in Form eines Multipositionsventils ausgebildet ist, und daß sowohl das Injektionsventil (55) als auch das Vorsäulenschaltventil (39) als 2-Positionsventile ausgebildet sind.

3. HPLC-Analyseeinrichtung nach Anspruch 1 oder 2, **dadurch gekennzeichnet, daß** je ein Ausgang der beiden Pumpen des binären Spritzenpumpensystems mit einem Flußsensor (33, 35) gekoppelt ist, die Ausgänge der Flußsensoren (33, 35) über eines der T-Stücke (31) verbunden und über das Ventil (39) der analytischen Säule (59) zugeschaltet sind.

4. Verwendung der HPLC-Analyseeinrichtung nach einem der Ansprüche 1 bis 3 für den Betrieb im Bereich der Ultra-, Mikro- und Nano-HPLC.

## Claims

1. HPLC analysis device, with an injection port (69), which is assigned an injection valve (55), with a precolumn (47), which is assigned a precolumn switch valve (39), with an analytical column (59), and with a single syringe pump system configured as a binary syringe pump system in which each of the pumps of the syringe pump system has pump heads (3, 5), each assigned a respective pump head valve (7, 9), and has two independent, separate and switchable outputs, and the individual outputs of the two pumps are connected via T-pieces, wherein one of the T-pieces (79) is connected to the injection valve (55), and the other of the T-pieces (31) is connected to the precolumn switch valve (39).

2. HPLC analysis device according to Claim 1, **characterized in that** each of the pump head valves (7, 9) is configured in the form of a multi-position valve, and **in that** both the injection valve (55) and also the precolumn switch valve (39) are configured as 2-position valves.

3. HPLC analysis device according to Claim 1 or 2, **characterized in that** a respective output of the two pumps of the binary syringe pump system is coupled to a flow sensor (33, 35), the outputs of the flow sensors (33, 35) being connected via one of the T-pieces (31) and being switched on via the valve (39) of the analytical column (59).

4. Use of the HPLC analysis device according to one of Claims 1 to 3 for operation in the field of ultra, micro and nano HPLC.

## Revendications

1. Dispositif d'analyse HPLC comprenant un orifice d'injection (69) auquel est associée une soupape d'injection (55), une pré-colonne (47), à laquelle est associée une soupape de commutation de pré-colonne (39), une colonne analytique (59) et un système de pompe de pulvérisation unique qui est réalisé sous forme de système de pompe de pulvérisation binaire dans lequel chacune des pompes du système de pompe de pulvérisation de pulvérisation présente des têtes de pompe (3, 5) auxquelles est à chaque fois associée une soupape de tête de pompe (7, 9), et dispose de deux sorties indépendantes séparées l'une de l'autre et commutables, et les sorties individuelles des deux pompes sont connectées par le biais de raccords en T, l'un des raccords en T (79) étant connecté à la soupape d'injection (55) et l'autre des raccords en T (31) étant connecté à la soupape de commutation de pré-colonne (39).

2. Dispositif d'analyse HPLC selon la revendication 1, **caractérisé en ce que** chacune des soupapes de tête de pompe (7, 9) est réalisée sous la forme d'une soupape à plusieurs positions et **en ce que** la soupape d'injection (55) ainsi que la soupape de commutation de pré-colonne (39) sont réalisées sous forme de soupape à 2 positions.

3. Dispositif d'analyse HPLC selon la revendication 1 ou 2, **caractérisé en ce qu'**une sortie des deux pompes du système de pompe de pulvérisation binaire est à chaque fois accouplée à un capteur de flux (33, 35), les sorties des capteurs de flux (33, 35) sont connectées par le biais de l'un des raccords en T (31) et sont commutées par le biais de la soupape (39) de la colonne analytique (59).

4. Utilisation du dispositif d'analyse HPLC selon l'une quelconque des revendications 1 à 3 pour le fonctionnement dans la plage ultra-HPLC, micro-HPLC et nano-HPLC.
